# EUROPEAN PATENT APPLICATION

(11) **EP 3 699 800 A1**
(43) Date of publication of application: **26.08.2020**
(21) Application number: 19158726.0
(22) Date of filing: 22.02.2019
(51) Int. Cl.: G06F 21/62, G06F 21/60

(54) **METHOD OF DISTRIBUTING AN OBJECT IN A DOCUMENT MANAGEMENT SYSTEM, COMPUTER PROGRAM, DOCUMENT MANAGEMENT SYSTEM**

(71) Applicant: Atos Information Technology GmbH, 81739 München (DE)
(72) Inventor: SCHUSTER, Dirk, 32816 Schieder-Schwalenberg (DE)
(74) Representative: Patentanwaltskanzlei WILHELM & BECK

(57) **Abstract**

In a method (100) of distributing an object in a document management system, the object is encrypted with a symmetric-key algorithm using a first document key in a first encryption step (111), providing a first encrypted object. Subsequently, a first receiving user who shall gain access to the object is identified and a first public key of the first receiving user is acquired in a first acquiring step (121). The first document key is encrypted with a public-key algorithm using the first public key, providing a first encrypted key in a first key encryption step (131). Then, the first encrypted object and the first encrypted key are uploaded to the document management system in a first up-load step (141).

## Description

The present invention relates to a method of distributing an object in a document management system, a computer program for carrying out the method, a device equipped to carry out the method and a document management system at least partially providing the computer program.

Web based storage (also known as cloud storage) of data or objects respectively is well known. Workgroups cooperating can save data or objects to the web based storage and access this data. If the data or objects contain information that should not be disclosed to the public, encryption of the files is available. File encryption is cumbersome, as an encryption key needs to be distributed to anyone who is allowed to access the encrypted file.

Known solutions for a web based storage include applications called VERTRAG, DMS-software of the Industrial Data Space of the Fraunhofer institute. These solutions do not allow for an easy to handle key distribution.

An assignment for the present invention is to allow for a method of distributing an object in a document management system providing an easy to handle key distribution. Other assignments of the present invention are to provide a computer program to carry out the method, devices carrying out the method and to provide a document management system providing both storage space for files and the software to use the storage space.

A solution of these assignments is provided by the independent claims. Embodiments of the invention are provided by the dependent claims.

In a method of distributing an object in a document management system, the object is encrypted with a symmetric-key algorithm using a first document key in a first encryption step, providing a first encrypted object. Subsequently, a first receiving user who shall gain access to the object is identified and a first public key of the first receiving user is acquired in a first acquiring step. The first document key is encrypted with a public-key algorithm using the first public key, providing a first encrypted key in a first key encryption step. Then, the first encrypted object and the first encrypted key are uploaded to the document management system in a first upload step.

The method may be implemented as a computer program comprising a sequence of computer-executable instructions which, when executed by a computer, cause the computer to carry out the method. A user of such a computer program may decide that a certain object should be shared with other users, particularly with receiving users. The computer program may be implemented in a way that the user only has to identify the object that shall be distributed and the users that shall gain access. Encrypting the object, acquiring the public keys of the other users, encrypting the document key and uploading the encrypted object and the encrypted key to the document management system then is carried out by the computer program automatically.

The first document key may be implemented as a cryptographic random number. A cryptographic random number may particularly obtained by a cryptographic pseudo-random number generator (CPRNG) or a cryptographically secure pseudo-random number generator (CSPRNG). A cryptographic random number fulfils requirements for a statistical randomness and hold up well under serious attack.

In one embodiment, a second receiving user who shall gain access to the object is identified and a second public key of the second receiving user is acquired in a second acquiring step. The first document key is then additionally encrypted with a public-key algorithm using the second public key, providing a second encrypted key in a second key encryption step and the second encrypted key is uploaded to the document management system in a second upload step. This allows for distributing the encrypted object to more than one receiving user.

The first and second acquiring step may be implemented directly following each other or in parallel. The first and second key encryption step may be implemented directly following each other or in parallel. The first and second uploading step may be implemented directly following each other or in parallel. Of course, more than two receiving users may gain access to the encrypted object by carrying out the steps of this embodiment another time.

In one embodiment, a user registers as a user of the document management system in a registration step. Upon registration of the user, a first public user key and a first private user key of a first public/private key pair are created in a first creating step. The first public user key is then uploaded to the document management system in a first key uploading step.

Using this method, any user of the document management system may provide a public key associated with said user. Other users that want to share an object with the user can use the public key to encrypt the document key and to provide the encrypted object and the encrypted document key to the user.

In one embodiment, the first private user key is symmetrically encrypted using a hash value of a user password as symmetric key. The hash value may be temporarily stored in a random access memory of a computer running a program carrying out the method during the encryption of the first private user key. The first private user key may be kept during a session of the user in an obfuscated form. The obfuscation may again be a symmetric encryption but this time with a temporary application key. This temporary application key may be kept in a memory segment, for instance of the random access memory, which may not be paged out. Paging out in this context may mean swapping the content of the memory segment to persistent storage. The obfuscated private key may be paged out. This may be necessary in order to keep the memory segment small which may not be paged out. The many private keys of the users currently online therefore need no special treatment. The calculation of the hash value of the user password may be implemented with a slow hash function, increasing the effort needed for a brute-force attack. Examples for such slow hash funtions include PBDKF2, scrypt or bcrypt.

In one embodiment, the first document key is encrypted with a public key algorithm using the first public user key in a third key encryption step, providing a third encrypted key. This allows for a secure storage of the first private user key in a password management system. In one embodiment, a second public user key and a second private user key of a second public/private key pair are created in a second creating step. Subsequently, the first document key is decrypted, using the first private user key in a first key decryption step and subsequently encrypted using the second public user key in a fourth key encryption step, providing a fourth encrypted key. This allows the user to change the public/private key pair within his password management system.

In one embodiment, the object is decrypted using the first document key in a first decryption step. Subsequently, the object is changed, particularly by a change carried out by the user. The changed object is then encrypted with a symmetric-key algorithm using a second document key in a second encryption step, providing a second encrypted object. Then, the first receiving user is identified and the first public key of the first receiving user is acquired in a third acquiring step. The second document key is encrypted with a public-key algorithm using the first public key, providing a fifth encrypted key in a fifth key encryption step. Subsequently the second encrypted object and the fifth encrypted key are uploaded to the document management system in a third upload step. This allows for a change of the object and subsequently providing a changed document key. Therefore, access to the encrypted object may be easier to control.

In one embodiment, additionally the second receiving user is identified and the second public key of the second receiving user is acquired in a fourth acquiring step. The second document key is encrypted with a public-key algorithm using the second public key, providing a sixth encrypted key in a sixth key encryption step. The sixth encrypted key is then uploaded to the document management system in a fourth upload step. Therefore, more than one user may gain access to the changed object.

Instead of decrypting the object with the first document key a user also may change an instance of the object stored locally on his computer and then encrypt said object using the method explained.

In one embodiment, the first document key and/or the second document key and/or the first private user key and/or the second private user key are provided in a password management system. This allows for an easy to handle system.

In one embodiment, the object comprises three dimensional data for an additive manufacturing process. Data allowing to perform an additive manufacturing process is highly sensitive, particularly if the object to be manufactured additively is a prototype. Construction data of such a prototype needs to be protected. Thusly, the presented method of organizing documents and encryption keys can be beneficially used on platforms to allow for accessing and corresponding to companies providing additive manufacturing services. Particularly the first user and/or the second user may be associated with such a company and/or provide additive manufacturing services.

A computer program comprises a sequence of computer-executable instructions which, when executed by a computer, cause the computer to carry out the described method.

A device for carrying out the described method is equipped to establish a communication connection to the document management system.

In one embodiment, the device additionally comprises a computer-readable storage medium, wherein the computer program carrying out the method is stored.

In one embodiment, at least part of the computer program according carrying out the method is provided by the document management system, particularly by a client server architecture.

A document management system provides a storage medium allowing for storage of encrypted objects and encrypted keys and may additionally provide the computer program carrying out the method at least partially.

The document management system may provide a web based platform for matching users who want to have an object additively manufactured with an additive manufacturing process and users who provide additive manufacturing services. The platform may also be capable of transmitting quotes of the users who provide additive manufacturing services to the users who want to have an object additively manufactured. Furthermore, the document management system may provide access to additional repositories and also manage access to the additional repositories. A user working for a company which only allows to store company data on a server owned by the company may provide access to a part of such a server, working as a repository, and upload objects to this part of the server. The encrypted document keys are distributed as described. The users providing additive manufacturing may also access said portion of the server to download the encrypted object.

The above-described properties, features and advantages of this invention as well as the way in which they are achieved, will become more clearly and comprehensively understandable in connection with the following description of the exemplary embodiments, which will be explained in more detail in connection with the drawings in which, in schematic representation in each case:
- Fig. 1: a flow diagram of a first example of the method;
- Fig. 2: another flow diagram of the first example of the method;
- Fig. 3: an encryption of an object and a first document key;
- Fig. 4: a flow diagram of a second example of the method;
- Fig. 5: another flow diagram of the second example of the method;
- Fig. 6: another encryption of the first document key;
- Fig. 7: a flow diagram of a third example of the method;
- Fig. 8: Users in a document management system; and
- Fig. 9: A sharing user device and a document management system server.

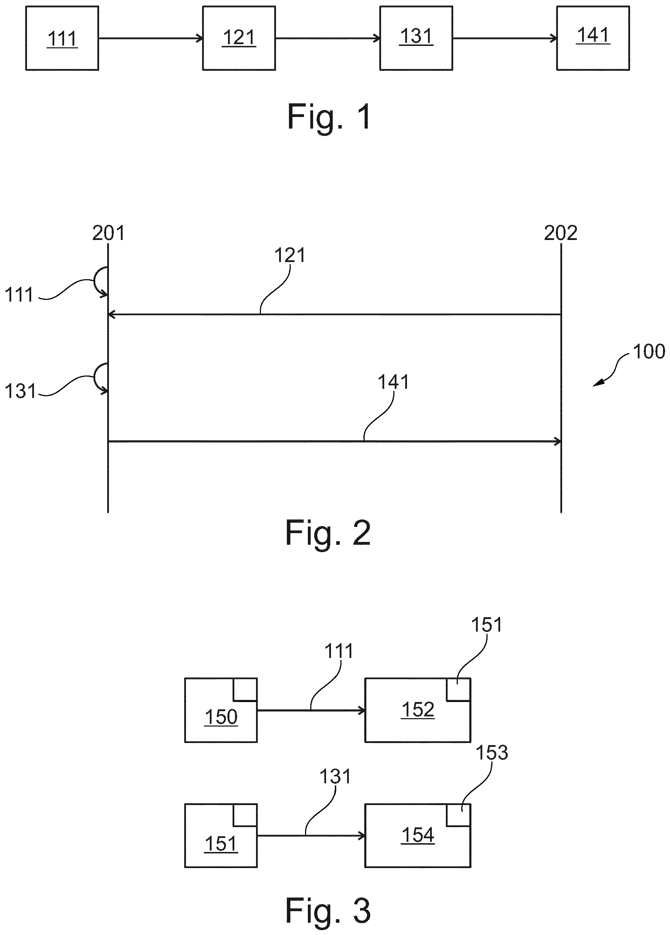

Fig. 1 shows a flow diagram of a method 100 of distributing an object in a document management system. Initially, the object is encrypted with a symmetric-key algorithm using a first document key in a first encryption step 111, providing a first encrypted object. In a subsequent first acquiring step 121, a first receiving user who shall gain access to the object is identified and a first public key of the first receiving user is acquired. Subsequently, in a first key encryption step 131, the first document key is encrypted with a public-key algorithm using the first public key, providing a first encrypted key. In a concluding first uploading step 141, the first encrypted object and the first encrypted key are uploaded to the document management system.

The symmetric-key algorithm may include Twofish, Serpent, AES (Rijndael), Blowfish, CAST5, Kuznyechik, RC4, DES, 3DES, Skipjack, Safer+/++, and IDEA. The public-key algorithm may include RSA, ElGamal, the Diffie-Hellman key exchange protocol, DSS (Digital Signature Standard), which incorporates the Digital Signature Algorithm, various elliptic curve techniques, various password-authenticated key agreement techniques, the Paillier cryptosystem, the Cramer-Shoup cryptosystem, YAK authenticated key agreement protocol. Other symmetric-key or public key algorithms may also be used.

Fig. 2 shows another flow diagram of the method 100 of Fig. 1. A sharing user 201 and a document management system 202 are represented by vertical lines. Arrows indicate the steps of the method carried out. The first encryption step 111 is carried out by the sharing user 201 as the sharing user 201 has access to the unencrypted object that shall be shared. In the first acquiring step 121 the sharing user 201 acquires information, particularly the first public key from the document sharing system 202. The encryption of the first document key in the first key encryption step 131 is again carried out by the sharing user 201. The upload of encrypted object and first encrypted key in the first upload step 141 is performed by a transfer of the encrypted object and first encrypted key from the sharing user 201 to the document management system 202.

Fig. 3 shows an object 150 encrypted in the first encryption step 111. A first document key 151 is applied during the first encryption step 111, leading to a first encrypted object 152. The first document key 151 is then encrypted in the first key encryption step 131 using a first public key 153 to obtain a first encrypted key 154. The first encrypted object 152 and the first encrypted key 154 are now ready for the upload to the document management system 202.

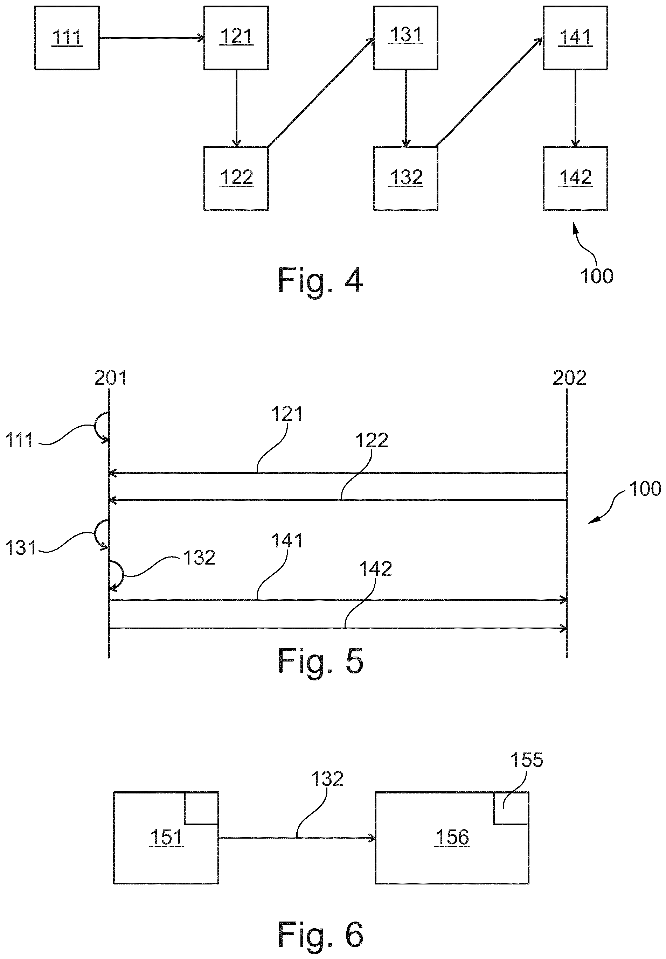

Fig. 4 shows a flow diagram of another embodiment of the method 100. Additionally to the steps of Fig. 1 to 3, a second acquiring step 122, a second key encryption step 132 and a second upload step 142 are performed. In the second acquiring step 122, a second receiving user who shall gain access to the object is identified and a second public key of the second receiving user is acquired. The second acquiring step 122 is performed after the first acquiring step 121. After the first key encryption step 133, the second key encryption step 132 is performed, in which the first document key is encrypted with a public-key algorithm using the second public key, providing a second encrypted key. In a second upload step 142 performed after the first upload step 141, the second encrypted key is uploaded to the document management system.

Fig. 5 shows a flow diagram of the embodiment of Fig. 4, using the presentation of Fig. 2 and including the additional steps 122, 132, 142.

It is also possible to perform the second acquiring step 122, the second key encryption step 132 and the second upload step 142 after the first upload step 141. Furthermore, it is possible to carry out the first acquiring step 131 and the second acquiring step 122 simultaneously, and/or to carry out the first key encryption step 131 and the second key encryption step 132 simultaneously and/or to carry out the first upload step 141 and the second upload step 142 simultaneously.

Fig. 6 shows the second key encryption step 132 in the representation of Fig. 3. The first document key 151 is encrypted with a second public key 155, leading to a second encrypted key 156.

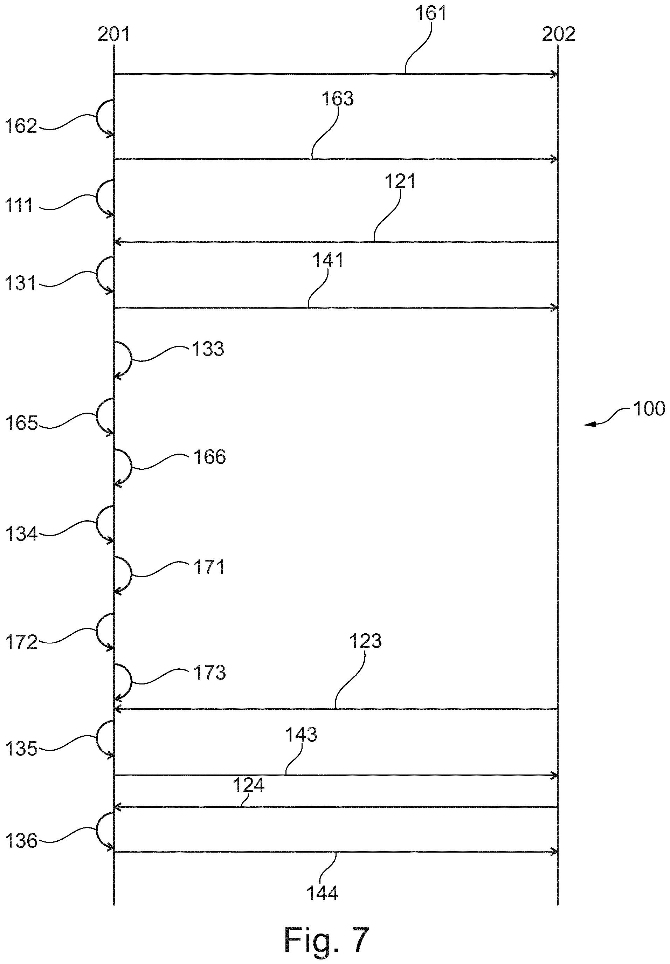

Fig. 7 shows a flow diagram 100 of further embodiments of the method 100 in the representation of Figs. 2 and 5. Before the first encryption step 111, a user registration may take place. The user registration for the sharing user 201 includes a registration step 161 in which the sharing user 201 registers with the document management system 202. Subsequently, in a first creating step 162 a first public user key and a first private user key of a first public/private key pair are created. The first public user key 163 is then transmitted to the document management system 202 in a subsequent first key uploading step 163.

Other users of the document management system may register to the document management system in a similar way, uploading their public keys in a step analog to the first key uploading step. These keys may be acquired during the first acquiring step 131 and/or the second acquiring step 132.

In one embodiment, the first private user key is additionally symmetrically encrypted using a hash value of a user password of the sharing user. Therefore, the first private user key is safely stored.

In one embodiment, also displayed in Fig. 7, the first document key is additionally encrypted with a public key algorithm using the first public user key in a third key encryption step 133. Therefore, the first document key may also be stored in a safe way.

In one embodiment, also displayed in Fig. 7, additionally a second public user key and a second private user key of a second public/private key pair are created in a second creating step 165. In a first key decryption step 166 the encrypted first document key is decrypted and subsequently encrypted with the second public user key in a fourth key encryption step 134, providing a fourth encrypted key. This embodiment allows the sharing user 201 to change his public/private key pair. All document key encrypted with the first public user key may be decrypted and subsequently encrypted using the second public user key to allow for an update of a password management system of the sharing user.

Fig. 7 shows another embodiment of the method 100, comprising steps which may be performed additionally or alternatively to the steps related to the registration step 161 explained above.

In this embodiment, the object is decrypted using the first document key in a first decryption step 171. Subsequently, the object is changed by the sharing user 201 in an object changing step 172. Alternatively to the first decryption step 171 and the object changing step 172 also another object or a changed object may be used by the sharing user 201, for instance when the object has been changed within a workgroup of the sharing user 201. This changed object is then encrypted with a symmetric-key algorithm using a second document key in a second encryption step 173, providing a second encrypted object. Subsequently, the first receiving user is identified and the first public key is acquired in a third acquiring step 123. This is performed to consider changes in the first public key between the first acquiring step 121 and the third acquiring step 123. In a fifth key encryption step 135, the second document key is then encrypted, providing a fifth encrypted key. In a third upload step 143 the second encrypted object and the fifth encrypted key are uploaded to the document management system 202.

Additionally, when the second encrypted object also shall be shared with a second user, a fourth acquiring step 124, a sixth key encryption step 136 and a fourth upload step 144 similar to the second acquiring step 122, the second key encryption step 132 and the second upload step 142 may be performed. The fourth acquiring step 124, the sixth key encryption step 136 and the fourth upload step 144 also are displayed in Fig. 7. The fourth acquiring step 124, the sixth key encryption step 136 and the fourth upload step 144 are, in contrast to Fig. 5, performed after the third upload step 143. Of course, the third acquiring step 123, the fifth key encryption step 135, the third upload step 143, the fourth acquiring step 124, the sixth key encryption step 136 and the fourth upload step 144 may be performed in the order as shown in Fig. 5 for the first acquiring step 121, the first key encryption step 131, the first upload step 141, the second acquiring step 122, the second key encryption step 132 and the second upload step 142.

In one embodiment, the first document key 151 and/or the second document key 155 and/or the first private user key and/or the second private user key are provided in a password management system. This allows for an easy to handle system.

In one embodiment, the object 150 comprises three dimensional data for an additive manufacturing process. Data allowing to perform an additive manufacturing process is highly sensitive, particularly if the object to be manufactured additively is a prototype. Construction data of such a prototype needs to be protected. Thusly, the presented method of organizing documents and encryption keys can be beneficially used on platforms to allow for accessing and corresponding to companies providing additive manufacturing services. Particularly the first user and/or the second user may be associated with such a company and/or provide additive manufacturing services. Especially the embodiment described in the context of the changing of the object in the object changing step 172 may be useful in this context, as the prototype may be tested and evaluated and subsequently, a second iteration of prototype manufacturing may take place.

The document management system 202 may also provide additional services, particularly a web interface allowing to select companies providing additive manufacturing services. After the first encryption step 111 a public key of these companies is acquired in the first acquiring step 121 and the first document key encrypted in the first key encryption step 131. After the first upload step 141, the companies may download the encrypted object and their corresponding encrypted key, decrypt the key with their private key. The document management system 202 may also provide the possibility to create and/or transmit quotes for the additive manufacturing according to the object data.

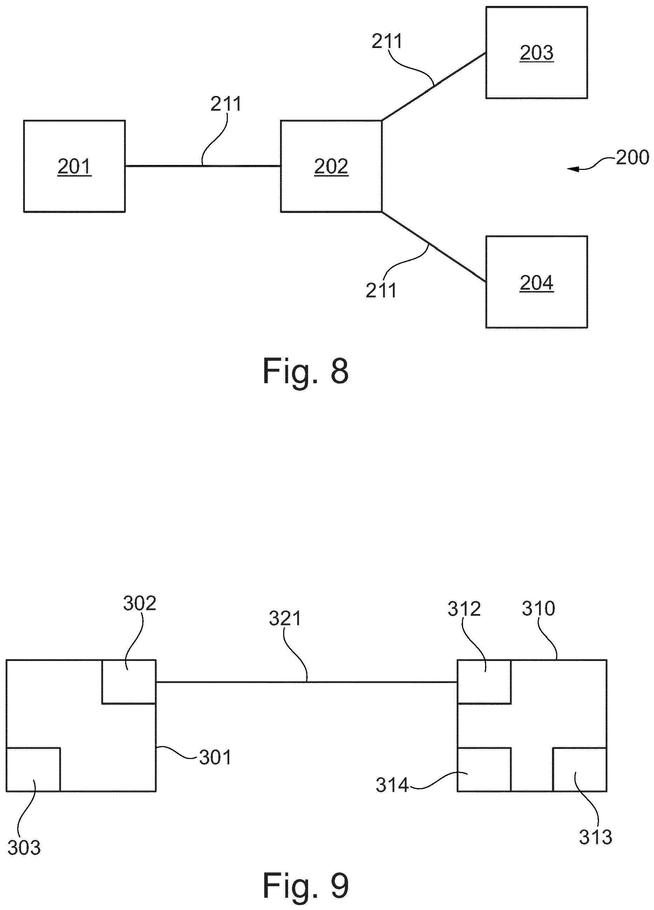

Fig. 8 shows a network 200 of a sharing user 201, a document management system 202, a first receiving user 203 and a second receiving user 204. The receiving users 203, 204 may provide additive manufacturing capabilities. The sharing user 201 and the receiving users 203, 204 are connected to the document management system 202 by connections 211, particularly over the internet.

The network 200 may include additional sharing users and additional receiving users. The document management system may be implemented in a way that all users, both sharing and receiving need to register according to the steps 161, 162, 163 described with respect to Fig. 7.

The invention further comprises a computer program with a sequence of computer-executable instructions which, when carried out by a computer, cause the computer to carry out the described method. The computer program may be part of a device controlled by the sharing user 201 or at least partially provided by the document management system 202 in form of a web-application, particularly in the form of a client-server software architecture.

The invention is described for the case that the receiving users only receive data and the sharing user only shares data. The invention is not limited on this, any user may be sharing user and receiving user simultaneously.

Fig. 9 shows a sharing user device 301 and a document management system server 310. The sharing user device comprises a user communication interface 302. The document management system server 310 comprises a server communication interface 312. The user communication interface 302 and the server communication interface 312 are connected by a communication connection 321, particularly by a network and/or internet connection. The sharing user device 301 comprises a user storage medium 303. The user storage medium 303 may comprise a computer program capable of carrying out the described method.

The document management system server 310 comprises a storage medium 313 and an optional key server 314. The storage medium 313 may be used to store data uploaded by the sharing user device 301, particularly encrypted objects and encrypted keys. The key server 314 may be used to store public key generated during the steps 161, 162, 163 described with respect to Fig. 7.

The storage 313 may also comprise a computer program at least partially capable of carrying out the described method, particularly in the form of a client server software architecture. It is possible, that both the sharing user device 301 and the document management system server 310 provide part of the computer program.

The invention has been illustrated and described in detail with the preferred exemplary embodiments. The invention is nevertheless not restricted to those examples disclosed. Rather, other variants may be derived therefrom by the person skilled in the art without departing from the protective scope of the invention.

### Reference List

- 100: method
- 111: first encryption step
- 121: first acquiring step
- 122: second acquiring step
- 123: third acquiring step
- 124: fourth acquiring step
- 131: first key encryption step
- 132: second key encryption step
- 133: third key encryption step
- 134: fourth key encryption step
- 135: fifth key encryption step
- 136: sixth key encryption step
- 141: first upload step
- 142: second upload step
- 143: third upload step
- 144: fourth upload step

- 150: object
- 151: first document key
- 152: first encrypted object
- 153: first public key
- 154: first encrypted key
- 155: second document key
- 156: second encrypted key

- 161: registration step
- 162: first creating step
- 163: first key uploading step
- 165: second creating step
- 166: first key decryption step
- 171: first decryption step
- 172: object changing step
- 173: second encryption step

- 200: network
- 201: sharing user
- 202: document management system
- 203: first receiving user
- 204: second receiving user
- 211: connection

- 301: sharing user device
- 302: user communication interface
- 303: user storage medium
- 310: document management system server
- 312: server communication interface
- 313: storage medium
- 314: key server
- 321: communication connection

## Claims

1. A method (100) of distributing an object (150) in a document management system (202), comprising the following steps:
- Encrypting the object (150) with a symmetric-key algorithm using a first document key (151) in a first encryption step (111), providing a first encrypted object (152);
- Identifying a first receiving user (203) who shall gain access to the object (150) and acquire a first public key (153) of the first receiving user (203) in a first acquiring step (121) ;
- Encrypting the first document key (151) with a public-key algorithm using the first public key (153), providing a first encrypted key (154) in a first key encryption step (131);
- Uploading the first encrypted object (152) and the first encrypted key (154) to the document management system (202) in a first upload step (141) .

2. The method (100) according to claim 1, further comprising the steps:
- Identifying a second receiving user (204) who shall gain access to the object (150) and acquire a second public key (155) of the second receiving user (204) in a second acquiring step (122) ;
- Encrypting the first document key (151) with a public-key algorithm using the second public key (155), providing a second encrypted key (156) in a second key encryption step (132);
- Uploading the second encrypted key (156) to the document management system (202) in a second upload step (142).

3. The method (100) of claim 1 or 2, further comprising the following steps:
- Registering as a user (201, 203, 204) of the document management system (202) in a registration step (161);
- Creating a first public user key and a first private user key of a first public/private key pair in a first creating step (162);
- Uploading the first public user key to the document management system (202) in a first key uploading step (163).

4. The method (100) according to claim 3, wherein the first private user key is symmetrically encrypted using a hash value of a user password as symmetric key.

5. The method (100) according to claims 3 or 4, wherein the first document key (151) is encrypted with a public key algorithm using the first public user key in a third key encryption step (133), providing a third encrypted key.

6. The method (100) according to claim 5, further comprising the steps:
- Creating a second public user key and a second private user key of a second public/private key pair in a second creating step (165);
- Decrypting the first document key (151) using the first private user key in a first key decryption step (166);
- Encrypting the first document key (151) using the second public user key in a fourth key encryption step (134), providing a fourth encrypted key.

7. The method (100) according to any of claims 1 to 6, further comprising the steps:
- Decrypting the object (150) using the first document key (151) in a first decryption step (171) ;
- Changing the object in an object changing step (172);
- Encrypting the object (150) with a symmetric-key algorithm using a second document key in a second encryption step (173), providing a second encrypted object;
- Identifying the first receiving (203) user who shall gain access to the object (150) and acquire the first public key (153) of the first receiving user (202) in a third acquiring step (123);
- Encrypting the second document key with a public-key algorithm using the first public key (153), providing a fifth encrypted key in a fifth key encryption step (135);
- Uploading the second encrypted object and the fifth encrypted key to the document management system in a third upload step (143).

8. The method according to claim 2 and 7, further comprising the steps:
- Identifying the second receiving user (204) who shall gain access to the object (150) and acquire the second public key (155) of the second receiving user in a fourth acquiring step (124) ;
- Encrypting the second document key with a public-key algorithm using the second public key (155), providing a sixth encrypted key in a sixth key encryption step (136);
- Uploading the sixth encrypted key to the document management system (202) in a fourth upload step (144).

9. The method (100) according to any of claims 1 to 8, wherein the first document key (151) and/or the second document key and/or the first private user key and/or the second private user key are provided in a password management system.

10. The method (100) according to any of claims 1 to 9, wherein the object (150) comprises three dimensional data for an additive manufacturing process.

11. A computer program comprising a sequence of computer-executable instructions which, when executed by a computer, cause the computer to carry out the method (100) according to any of claims 1 to 10.

12. A device (301) for carrying out the method (100) according to any of claims 1 to 10, equipped to establish a communication connection (321) to a document management system server (310).

13. The device (301) according to claim 12, additionally comprising a computer-readable storage medium (303), wherein the computer program according to claim 11 is stored in the storage medium (303).

14. The device (301) according to claim 12, wherein at least part of the computer program according to claim 12 is provided by the document management system server (310), particularly by a client server architecture.

15. A document management system server (310), providing a storage medium (313) allowing for storage of encrypted objects and encrypted keys, providing the computer program of claim 11 at least partially.
